Europäisches Patentamt

European Patent Office

Office européen des brevets

(19)

(11) Numéro de publication : **0 352 831 B1**

(12) **FASCICULE DE BREVET EUROPEEN**

(45) Date de publication du fascicule du brevet :
**31.08.94 Bulletin 94/35**

(51) Int. CI.$^5$ : **H04N 5/33**

(21) Numéro de dépôt : **89201583.5**

(22) Date de dépôt : **19.06.89**

(54) **Système de télévision à bas niveau de lumière générant des images colorées.**

(30) Priorité : **24.06.88 FR 8808505**

(43) Date de publication de la demande :
**31.01.90 Bulletin 90/05**

(45) Mention de la délivrance du brevet :
**31.08.94 Bulletin 94/35**

(84) Etats contractants désignés :
**DE FR GB**

(56) Documents cités :
**FR-A- 1 592 870**
**GB-A- 2 143 397**
**US-A- 3 971 068**
**US-A- 4 016 597**
**US-A- 4 403 251**
**US-A- 4 751 571**
**IBM TECHNICAL DISCLOSURE BULLETIN,**
**vol. 13, no. 3, août 1970, pages 612-613, New**
**York, US; VW.T. TOWNSEND: "Image contrast**
**enhancement"**

(73) Titulaire : **LABORATOIRES D'ELECTRONIQUE**
**PHILIPS**
**3, Avenue Descartes**
**F-94450 Limeil-Brévannes (FR)**
(84) **FR**
Titulaire : **N.V. Philips' Gloeilampenfabrieken**
**Groenewoudseweg 1**
**NL-5621 BA Eindhoven (NL)**
(84) **DE GB**

(72) Inventeur : **Vittot, Michel Société Civile S.P.I.D.**
**209, rue de l'Université**
**F-75007 Paris (FR)**
Inventeur : **Fouassier, Michèle Société Civile**
**S.P.I.D.**
**209, rue de l'Université**
**F-75007 Paris (FR)**
Inventeur : **Richard, Jean-Claude Société**
**Civile S.P.I.D.**
**209, rue de l'Université**
**F-75007 Paris (FR)**
Inventeur : **Dietz, Jean Société Civile S.P.I.D.**
**209, rue de l'Université**
**F-75007 Paris (FR)**

(74) Mandataire : **Landousy, Christian et al**
**Société Civile S.P.I.D.**
**156, Boulevard Haussmann**
**F-75008 Paris (FR)**

EP 0 352 831 B1

## Description

L'invention concerne un système de télévision apte à reproduire une image d'un rayonnement infra-rouge et une image d'un rayonnement visible comprenant :
- un premier tube de prise d'image qui détecte un rayonnement visible issu d'une scène,
- un second tube de prise d'image qui détecte un autre rayonnement issu de la même scène, les deux tubes étant placés côte à côte,
- des moyens d'optique d'entrée pour fournir à chaque tube les rayonnements requis,
- un moniteur de télévision pour visualiser des signaux issus des deux tubes et les combiner pour former une image colorée unique.

On connaît le document FR-A-2 168 427 qui décrit un système comprenant 2 voies qui opèrent sur des domaines de longueur d'onde différents : l'un qui s'étend de 400 nm à 900 nm et l'autre dans l'infra-rouge thermique (émission). Les deux voies sont munies chacune d'un objectif adapté à la longueur d'onde transmise et de deux détecteurs adaptés aux domaines de longueur d'ondes. Les signaux délivrés par chacune des voies sont combinés sur un tube à rayons cathodiques.

Dans le cas d'imagerie à bas niveau de lumière on a besoin de dispositifs peu encombrants, d'un coût peu élevé, portables pour être fabriqués pour des applications grand public telles que la surveillance de locaux. Les détecteurs à infra-rouge thermique sont d'un coût trop élevé pour ce type d'application et d'autres solutions doivent être recherchées. La suppression du détecteur à infra-rouge thermique conduit à un équipement qui fonctionne en une seule couleur (échelle de gris pour représenter les objets et leur contour). Dans un tel système, pour obtenir la meilleure détectivité et pourvoir restituer une image perceptible même aux niveaux d'éclairement très faible ($E < 10^{-5}$ lux) correspondant aux nuits les plus sombres, on utilise des photocathodes ayant le domaine de sensibilité spectrale le plus large possible surtout vers le proche infra-rouge, telles les photocathodes S25 ou les photocathodes au GaAs et ayant la plus grande sensibilité. En effet, dans le proche infra-rouge la radiance des objets est meilleure que dans le visible. Malgré cela, la détection de certains objets peut devenir difficile par manque de contraste entre certains matériaux. Si l'on considère par exemple la végétation et le béton, leurs coefficients de réflexion en fonction de la longueur d'onde sont très différents. La végétation reflète environ 10% dans le visible et environ 60% dans le proche infra-rouge, tandis que le béton réfléchit environ 30% tout le long du spectre. Il y a donc une inversion de contraste vers le milieu du domaine spectral de sensibilité des photocathodes S25 vers 700 nm environ. Avec une telle photocathode la végétation et le béton donnent le même courant photocathode donc la même luminance d'écran : le contraste entre ces deux matériaux semblera nul ou très faible.

Une approche purement optique, pour restituer des images intensifiées et colorées, a été proposée par H. MULDER dans "Advances in Electronics and Electrons physics -6th Symposium on photoelectronic image devices -London 1976 Vol. 40A page 33". Il décrit un système intensificateur d'image à visée directe. Le spectre est séparé en deux parties, une partie infra-rouge dont les longueurs d'onde sont sensiblement supérieures à environ 700 nm et une partie visible dont les longueurs d'onde sont sensiblement inférieures à 700 nm. Chaque partie du spectre est intensifiée séparément et est restituée en deux couleurs spécifiques par exemple vert pour le proche infra-rouge, et rouge pour le visible. Ainsi avec un tel système dichrome la végétation émettant plus dans l'infra-rouge sera vue en vert tandis que le béton sera vu en brun (mélange de vert et de rouge). Le contraste entre ces deux matériaux sera alors donné par une différence de couleurs et ceux-ci seront alors identifiés.

Un tel système dichrome utilise un seul tube et sépare le spectre en deux parties distinctes par un miroir dichroïque. L'inconvénient d'un tel système dichrome est que chaque moitié du tube ne reçoit qu'une partie du spectre photonique donc moins de photons qu'un système monochrome, ce qui conduit à une augmentation relative du bruit donc à une détérioration de ladite détectivité de chaque voie.

Une invention du genre décrit dans le premier paragraphe est connue du document FR-A-1 592 870. Il décrit une installation de télévision permettant de détecter une émission thermique infra-rouge et un rayonnement visible. Un miroir dichroïque assure là aussi une séparation des rayonnements. Cette installation n'est pas adaptée pour détecter de très bas niveaux de rayonnement en particulier ceux qui sont dus à un rayonnement réfléchi par opposition à un rayonnement émis. A ces faibles niveaux de lumière, un tel système est déficient par le contraste et le bruit de l'image restituée.

Le problème posé par l'invention est d'améliorer la détectivité d'un système de télévision à bas niveau de lumière en disposant d'un bon constraste sans augmenter le bruit dans l'image afin d'obtenir un bon confort d'observation de l'image et de permettre une rapidité de perception par l'observateur.

La solution au problème posé consiste en ce que pour améliorer le contraste et le bruit de l'image, le système comprend :
- une voie principale ayant le second tube qui détecte à la fois des rayonnements visibles et infra-rouges issus de la scène, une optique d'entrée pour capter un flux lumineux principal, à faible niveau de lumière, dans un spectre large de longueur d'onde de 400 nm à 1000 nm environ,

- une voie de coloration comprenant le premier tube et une autre optique d'entrée pour capter un autre flux lumineux de coloration distinct du flux principal, ledit flux lumineux de coloration étant issu de la même scène, à bas niveau de lumière, dans une partie visible, de 400 nm à 700 nm environ, dudit spectre large,

- les deux tubes de prise d'image étant des tubes à bas niveau de lumière aptes à détecter une très faible quantité de lumière réfléchie par des objets de la scène, d'une part dans le visible et l'infra-rouge pour la voie principale et d'autre part dans le visible seul pour la voie de coloration.

La première voie (principale) correspond à un équipement noir et blanc de haute performance capable de délivrer une image bien résolue et avec un bon rapport signal à bruit.

Préférentiellement les tubes à prise de vue à bas niveau de lumière comprennent un tube intensificateur d'image couplé à un dispositif à transfert de charges capteur d'images par exemple tel que cela est décrit dans l'article de M. LEMONIER et al. dans OPTO 82 PARIS-16-18 novembre 1982 pages 85 à 87. Le tube intensificateur d'image de la deuxième voie (voie de coloration) peut comprendre une photocathode bialcaline ou une photocathode trialcaline de type S25 ayant une sensibilité adaptée au domaine de longueurs d'ondes limité par un filtre optique. Le domaine de longueur d'onde peut être limité par la photocathode elle-même ou par le filtre optique.

Selon l'invention, on améliore la détectivité d'un système de télévision à bas niveau de lumière en ajoutant la voie de coloration qui apporte du contraste de couleur et augmente la quantité de lumière globale reçue en entrée. Le signal vidéo de la voie de coloration est traité de façon à réduire le bruit du tube intensificateur. En effet, ce tube reçoit moins de photons que celui de la voie principale, car la bande spectrale est plus étroite, la sensibilité spectrale est plus faible et les coefficients de réflexion sont moins élevés. Dans ces conditions le bruit de grenaille (ou bruit de photons) ainsi que les fluctuations de gain dues à la galette de microcanaux font apparaître un bruit de signal qu'il est utile de réduire par un écrétage et/ou par une intégration. On élimine ainsi les parasites dus au retour ionique dans le tube intensificateur qui donneraient des impulsions très lumineuses très gênantes à l'observation. Pour cela un filtre électronique écrête les fortes impulsions parasites délivrées par le tube intensificateur d'image. Le filtre électronique peut opérer une intégration temporelle sur plusieurs trames successives sans dégrader la résolution image qui est obtenue sur la voie principale.

Ainsi selon l'invention le système de télévision proposé permet sur la voie principale à spectre étendu d'obtenir le maximum d'informations sur l'image avec le maximum de détection (liée à la sensibilité de la photocathode), le maximum de résolution et le minimum de bruit, et sur la voie de coloration d'obtenir une information supplémentaire de contraste entre les matériaux par l'apport de couleur : cette voie apporte une coloration de plage mais ne détermine ni l'information spatiale ni l'information temporelle qui est fournie par la voie principale. Les deux voies doivent être synchrones.

Si on utilise un tube moniteur trichrome il est possible que le système de télévision comprenne un circuit de traitement qui combine les signaux issus de la voie principale et ceux issus de la voie de coloration et qui agit sur un troisième canon du moniteur couleur de télévision. Le contraste de l'image ainsi obtenue est encore amélioré. Le circuit de traitement peut être muni d'une commande permettant d'afficher un repère sur l'écran.

L'invention sera mieux comprise à l'aide des figures suivantes données à titre d'exemples non limitatifs qui représentent :

Figure 1 : un système de télévision à bas niveau de lumière selon l'invention.

Figure 2 : un système analogue à celui de la figure 1 avec en supplément un circuit de traitement.

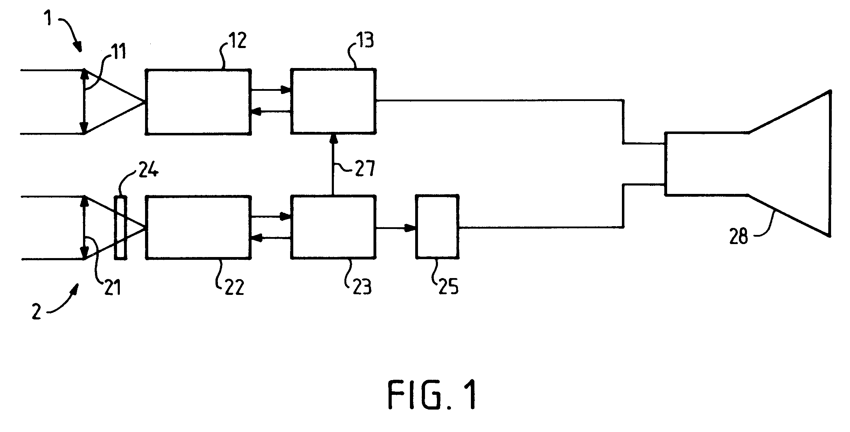

Sur la figure 1, la voie principale 1 comprend une optique d'entrée 11 qui focalise le faisceau incident sur l'entrée d'un tube de prise de vue 12 qui reçoit des signaux de commande et délivre un signal vidéo à un circuit électronique de commande et de sortie 13. La voie de coloration 2 qui apporte de la couleur comprend une optique d'entrée 21 suivie d'un filtre optique 24 tous deux disposés pour que le faisceau incident soit focalisé sur l'entrée du tube de prise de vue 22 qui reçoit des signaux de commande et délivre un signal vidéo à un circuit électronique de commande et de sortie 23. Le filtre optique est adapté aux caractéristiques de la photocathode. Les circuits 13 et 23 sont synchronisés entre eux par une connexion 27. La sortie du circuit 23 entre dans un filtre électronique 25 qui effectue un écrêtage et/ou une intégration temporelle. Les deux voies 1 et 2 délivrent des signaux vidéo qui opèrent chacun sur un canon différent d'un moniteur couleur 28. Le filtre optique 24 élimine la partie infrarouge du spectre de lumière nocturne réfléchie située à des longueurs d'ondes supérieures à environ 700 nm. Les objectifs d'entrée 11, 21 ont une grande ouverture environ f/1 et sont très lumineux. Les tubes des prises de vue 12, 22 sont munis de tubes intensificateurs d'image qui présentent une grande sensibilité (50 mA/W respectivement vers 800 nm et 500 nm) et une grande résolution (par exemple supérieure à environ 30 paires de lignes par millimètre à 4% de contraste pour un diamètre de surface sensible de 18 mm).

Optiquement les deux voies 1 et 2 sont juxtaposées, c'est-à-dire que les tubes de prise de vue et leurs optiques sont placés côte à côte. Ainsi chaque voie traite la totalité de la lumière reçue par son optique d'entrée.

Le tableau I donne en unités arbitraires des valeurs de flux lumineux sur les deux voies pour la végétation et le béton.

| | voie principale à spectre étendu | voie à spectre filtré | rapport des deux voies |
|---|---|---|---|
| végétation | 13 600 | 1 800 | 7,55 |
| béton | 12 400 | 4 700 | 2,64 |
| contraste | 4,6 % | 44,6 % | |

**TABLEAU I**

On observe que pour la voie principale à spectre étendu le contraste C entre ces matériaux est quasiment nul :

$$C = \frac{13\,600 - 12\,400}{13\,600 + 12\,400} = 4{,}6\,\%$$

Par contre pour la voie à spectre filtré le contraste est important :

$$C = \frac{4\,700 - 1800}{4\,700 + 1800} = 44{,}6\,\%$$

Si l'on compare la voie de coloration par rapport à la voie principale, on observe que pour la végétation la quantité de lumière est divisée par 7,55 c'est-à-dire que le rapport signal sur bruit S/B est divisé par 2,75. Pour le béton la quantité de lumière est divisée par 2,64 c'est-à-dire que S/B est divisé par 1,62. Le rapport S/B de la voie filtrée est donc nettement moins bon que celui de la voie principale. Pour l'améliorer on opère un traitement du signal vidéo par le filtre électronique 25.

Pour le contraste de couleur on a pour la végétation un rapport de 7,55 et pour le béton un rapport de 2,64 entre les deux voies. Si la voie principale agit sur le canon vert du moniteur et la voie filtrée agit sur le canon rouge du moniteur la végétation apparaîtra alors 7,55 fois plus verte que rouge tandis que le béton sera un mélange de vert et de rouge (rapport 2, 64). L'équilibrage des voies verte et rouge peut être modifié par le réglage du moniteur lui-même.

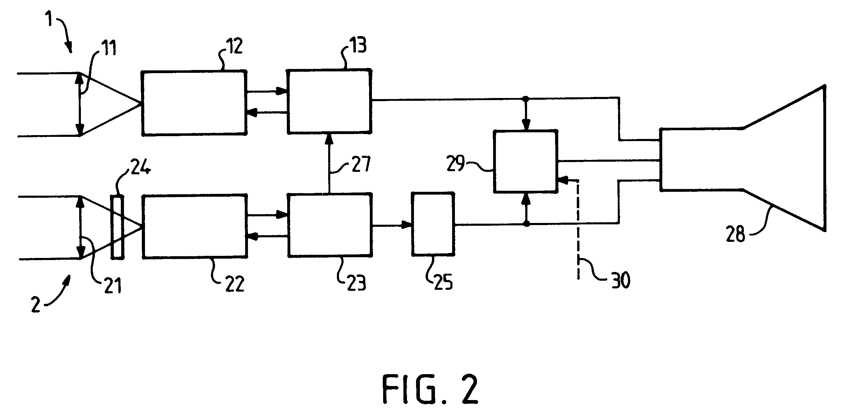

La figure 2 représente le système de télévision avec en plus un circuit de traitement 29 pour combiner les signaux issus des deux voies. Les autres éléments sont représentés avec les mêmes repères. Cette combinaison peut consister à effectuer par exemple une moyenne, ou une somme pondérée des signaux issus des deux voies de détection ou toute combinaison plus élaborée de ces deux voies permettant d'accroître le contraste de l'image visualisée. La sortie du circuit 29 agit sur la troisième voie couleur du moniteur 28. Il est ainsi possible de changer la palette de couleurs de l'image observée ou de renforcer les contours. On peut aussi visualiser des repères dont les coordonnées peuvent être introduites par l'entrée 30. Toutes ces informations issues de cette combinaison, qui viennent s'ajouter sur l'écran, contribuent à assurer à l'image un meilleur contraste et un meilleur confort d'image. Ces améliorations augmentent la détectivité du système et la rapidité de perception des détails contenus dans l'image intensifiée.

L'invention est décrite avec un moniteur utilisant un tube à rayons cathodiques mais on peut utiliser n'importe quel dispositif de visualisation couleur.

**Revendications**

1. Système de télévision apte à reproduire une image d'un rayonnement infra-rouge et une image d'un rayonnement visible comprenant :
   - un premier (22) tube de prise d'image qui détecte un rayonnement visible issu d'une scène,
   - un second (12) tube de prise d'image qui détecte un autre rayonnement issu de la même scène, les

4

deux tubes étant placés côte à côte,
- des moyens (11) (21, 24) d'optique d'entrée pour fournir à chaque tube les rayonnements requis,
- un moniteur (28) de télévision pour visualiser des signaux issus des deux tubes et les combiner pour former une image colorée unique,

caractérisé en ce que, pour améliorer le contraste et le bruit de l'image, le système comprend :
- une voie principale (1) ayant le second tube (12) qui détecte à la fois des rayonnements visibles et infra-rouges issus de la scène, une optique d'entrée (11) pour capter un flux lumineux principal, à faible niveau de lumière, dans un spectre large de longueur d'onde de 400 nm à 1000 nm environ,
- une voie de coloration (2) comprenant le premier tube (22) et une autre optique d'entrée (21, 24) pour capter un autre flux lumineux de coloration distinct du flux principal, ledit flux lumineux de coloration étant issu de la même scène, à bas niveau de lumière, dans une partie visible, de 400 nm à 700 nm environ, dudit spectre large,
- les deux tubes de prise d'image étant des tubes à bas niveau de lumière aptes à détecter une très faible quantité de lumière réfléchie par des objets de la scène, d'une part dans le visible et l'infra-rouge pour la voie principale et d'autre part dans le visible seul pour la voie de coloration.

2. Système selon la revendication 1, caractérisé en ce que le domaine visible (400 nm à 700 nm environ) capté par la voie de coloration est déterminé par la sensibilité de la photocathode du tube de détection.

3. Système selon la revendication 1, caractérisé en ce que le domaine visible (400 nm à 700 nm environ) capté par la voie de coloration est déterminé par un filtre optique.

4. Système de télévision selon une des revendications 1 à 3, caractérisé en ce que les deux tubes de prise de vue à bas niveau de lumière comprennent un tube intensificateur d'images couplé à un dispositif à transfert de charges capteur d'images.

5. Système de télévision selon une des revendications 1 à 4, caractérisé en ce que le tube de la voie de coloration comprend une photocathode trialcaline de type S25 ou bialcaline.

6. Système de télévision selon l'une des revendications 1 à 5, caractérisé en ce qu'il comprend un filtre électronique (25) qui écrête les fortes impulsions parasites délivrées par le tube intensificateur d'images de la voie de coloration.

7. Système de télévision selon la revendication 6, caractérisé en ce que le filtre électronique opère une intégration temporelle sur plusieurs trames successives du signal de type télévision produit par la voie de coloration.

8. Système de télévision selon une des revendications 1 à 7, caractérisé en ce qu'il comprend un circuit de traitement qui combine les signaux issus des deux voies afin d'agir sur une troisième voie couleur du moniteur de télévision.

9. Système de télévision selon la revendication 8, caractérisé en ce que le circuit de traitement possède une entrée (30) pour commander un affichage d'un repère sur l'écran.

## Patentansprüche

1. Fernsehsystem, das aus einer Infrarotstrahlung und einer sichtbaren Strahlung ein Bild reproduzieren kann, mit:
- einer ersten (22) Bildaufnahmeröhre, die eine von einer Szene ausgehende sichtbare Strahlung erfaßt,
- einer zweiten (12) Bildaufnahmeröhre, die eine von derselben Szene ausgehende andere Strahlung erfaßt, wobei die beiden Röhren nebeneinander angeordnet sind,
- optischen Eintrittseinrichtungen (11) (21, 24), die den Röhren jeweils die erforderlichen Strahlungen zuleiten,
- einem Fernsehbildschirm (28), der die von den beiden Röhren ausgehenden Signale sichtbar macht und sie zu einem gefärbten Bild kombiniert, dadurch gekennzeichnet, daß das System zur Verbesserung des Kontrasts und des Bildrauschens folgende Einrichtungen umfaßt:
- einen Hauptkanal (1) mit der zweiten Röhre (12), die gleichzeitig von der Szene ausgesandte sichtbare Strahlung und Infrarotstrahlung erfaßt, und eine Eintrittsoptik (11), die einen Hauptlichtstrom niedrigen Lichtstärkepegels in einem breiten Wellenlängenspektrum von etwa 400 nm bis 1000 nm einfängt,

- einen Farbungskanal (2) mit der ersten (22) Röhre und einer weiteren Eintrittsoptik (21, 24) , die einen anderen, vom Hauptlichtstrom getrennten Farbungslichtstrom mit niedrigem Lichtstärkepegel in einem sichtbaren Bereich von etwa 400 nm bis 700 nm des breiten Spektrums einfängt, wobei der Farbungslichtstrom von der gleichen Szene ausgesandt wird,
- wobei es sich bei den beiden Bildaufnahmeröhren um Röhren mit niedrigem Lichtstärkepegel handelt, die in der Lage sind, selbst sehr geringe von den Objekten der Szene abgestrahlte Lichtmengen zu erfassen, und zwar einerseits im Hauptkanal sichtbare Strahlung und Infrarotstrahlung und andererseits im Farbungskanal nur sichtbare Strahlung.

2.  System nach Anspruch 1, dadurch gekennzeichnet, daß der vom Farbungskanal eingefangene sichtbare Bereich (400 nm bis 700 nm) durch die Empfindlichkeit der Fotokathode der Erfassungsröhre bestimmt ist.

3.  System nach Anspruch 1, dadurch gekennzeichnet, daß der vom Farbungskanal eingefangene sichtbare Bereich (400 nm bis 700 nm) durch ein optisches Filter bestimmt ist.

4.  Fernsehsystem nach einem der Ansprüche 1 bis 3, dadurch gekennzeichnet, daß die beiden Bildaufnahmeröhren für niedrige Lichtstärkepegel eine mit einer Bildaufnahme-Ladungsübertragungsvorrichtung gekoppelte Bildverstärkerröhre umfaßt.

5.  Fernsehsystem nach einem der Ansprüche 1 bis 4, dadurch gekennzeichnet, daß die Röhre des Farbungskanals eine trialkalische Fotokathode des Typs S25 oder eine bialkalische Fotokathode umfaßt.

6.  Fernsehsystem nach einem der Ansprüche 1 bis 5, dadurch gekennzeichnet, daß es ein elektronisches Filter (25) umfaßt, das von der Bildverstärkerröhre des Farbungskanals gelieferte starke Störimpulse kappt.

7.  Fernsehsystem nach Anspruch 6, dadurch gekennzeichnet, daß das elektronische Filter eine zeitliche Integration an mehreren aufeinanderfolgenden Halbbildern des vom Farbungskanal erzeugten Fernsehsignals durchführt.

8.  Fernsehsystem nach einem der Ansprüche 1 bis 7, dadurch gekennzeichnet, daß es eine Verarbeitungsschaltung umfaßt, die die von den beiden Kanälen erhaltenen Signale kombiniert und an einem dritten Farbkanal des Fernsehbildschirms liegt.

9.  Fernsehsystem nach Anspruch 8, dadurch gekennzeichnet, daß die Verarbeitungsschaltung einen Eingang (30) zur Steuerung einer Anzeige einer Markierung auf dem Bildschirm besitzt.

## Claims

1.  A television system suitable for reproducing an infrared radiation image and a visible radiation image, comprising:
    - a first image pick-up tube (22) which detects visible radiation from a scene,
    - a second image pick-up tube (12) which detects different radiation from the same scene, the two tubes being positioned side by side,
    - optical input means (11) (21, 24) for supplying the required radiation to each tube,
    - a television monitor (28) for visualizing signals from the two tubes and for combining them to form a single coloured image,
    characterized in that, for improving the contrast and the noise of the image, the system comprises:
    - a main channel (1) including the second tube (12) which detects the visible and infrared radiation from the scene at the same time, an input lens (11) for picking up a main luminous flux at a low light level in a wide spectrum having a wavelength of approximately 400 to 1000 nm,
    - a colouring channel (2) including the first tube (22) and a further input lens (21, 24) for picking up another luminous colouring flux which is different from the main flux, said luminous colouring flux coming from the same scene and having a low light level in a visible part ranging from approximately 400 to 700 nm in said wide spectrum,
- the two image pick-up tubes being low light level tubes suitable for detecting a very small quantity of light reflected by the objects of the scene in the visible and infrared ranges for the main channel and in the visible range only for the colouring channel.

2. A system as claimed in Claim 1, characterized in that the visible range (400 nm to approximately 700 nm) detected by the colouring channel is determined by the sensitivity of the photocathode of the detector tube.

3. A system as claimed in Claim 1, characterized in that the visible range (400 nm to approximately 700 nm) detected by the colouring channel is determined by an optical filter.

4. A television system as claimed in any one of Claims 1 to 3, characterized in that the two low light level pick-up tubes include an image intensifier tube which is coupled to an image sensor charge transfer device.

5. A television system as claimed in any one of Claims 1 to 4, characterized in that the tube of the colouring channel includes a trialkaline photocathode of the type 525 or a bialkaline photocathode.

6. A television system as claimed in any one of Claims 1 to 5, characterized in that it includes an electronic filter (25) which clips the strong parasitic pulses supplied by the image intensifier tube of the colouring channel.

7. A television system as claimed in Claim 6, characterized in that the electronic filter provides a temporal integration over several consecutive fields of the television-type signal produced by the colouring channel.

8. A television system as claimed in any one of Claims 1 to 7, characterized in that it includes a processing circuit which combines the signals coming from the two channels so as to act on a third colour channel of the television monitor.

9. A television system as claimed in Claim 8, characterized in that the processing circuit has an input (30) for controlling the display of a reference on the screen.

FIG. 1

EP 0 352 831 B1

FIG. 2